# EUROPEAN PATENT SPECIFICATION

(11) **EP 2 344 407 B1**
(45) Date of publication and mention of the grant of the patent: **20.11.2013**
(21) Application number: 08824655.8
(22) Date of filing: 06.10.2008
(51) Int. Cl.: B66B 13/30, E05D 15/06

(54) **INTUMESCENT THERMAL BARRIER FROM HUB TO TIRE**
INTUMESZIERENDE WÄRMESPERRE VON NABE ZU REIFEN
BARRIÈRE THERMIQUE INTUMESCENTE ENTRE MOYEU ET PNEUMATIQUE

(43) Date of publication of application: 20.07.2011
(73) Proprietor: Otis Elevator Company, Farmington, CT 06032 (US)
(72) Inventor: YU, Xiaomei, Farmington, Connecticut 06032 (US); WANG, Jinliang, Farmington, Connecticut 06032 (US); MILTON-BENOIT, John, M., Farmington, Connecticut 06032 (US)
(74) Representative: Leckey, David Herbert
(86) International application number: PCT/US2008/078917
(87) International publication number: WO 2010/042099

(56) References cited:
- EP-A- 1 359 276
- GB-A- 1 470 491
- US-A1- 2004 124 038

## Description

### BACKGROUND

The present invention relates to an elevator shaft closure, which is preferably used for elevator installations with fire protection requirements as are demanded in known standards.

The elevator shaft closure enables access from the floor to the car. It includes the principal parts of a door frame and at least one door leaf. The door frame, typically including a header and/or ceiling plate, is alternatively connected, depending on the type of building, directly with a wall or on a foundation frame. At least one door leaf is slidably mounted in the door frame. Depending on the possible forms of arrangement of the door leaves, distinction is then made between single-leaf or multi-leaf telescopic doors or center doors. Telescopic doors close and open on one side, whereas center-opening doors close from both sides towards the center or middle of the door opening (and open from the middle of the door opening toward both sides). Each door is actuated by exertion of a force onto the door, and the door moves via one or more rollers attached to the door interacting with a rail.

The fire safety of elevator landing door systems during fires in buildings is ensured by a standard fire test of door assemblies regulated by the requirements defined in an applicable country standard. For example, under the UL 10B standard in the United States, the temperature in a test heating furnace gradually ramps from ambient to 982 °C during 90 minutes to simulate possible fire conditions in an actual building. One of the primary requirements for successfully passing the test is absence of visible flames in any component of the door assembly for the whole duration of the test. For example, in a typical test furnace the temperature is controlled by a specified time-temperature curve; any flaming on the unexposed door surface is recorded. The test typically requires that no flame should be observed on the unexposed door surface during the first 30 minutes, and no flame should last more than five (5) seconds after thirty minutes during testing.

In light of the foregoing, the present invention aims to resolve one or more of the aforementioned issues that afflict elevator systems, particularly door assemblies.

### SUMMARY

In accordance with one aspect of the present invention there is provided a door assembly as set forth in claim 1.

In accordance with another aspect of the present invention there is provided an elevator as set forth in claim 5.

In accordance with another aspect of the present invention there is provided a roller assembly as set forth in claim 11.

It is to be understood that both the foregoing general description and the following detailed description are exemplary and explanatory only, and are not restrictive of the invention as claimed.

### BRIEF DESCRIPTION OF THE DRAWINGS

These and other features, aspects, and advantages of the present invention will become apparent from the following description, appended claims, and the accompanying exemplary embodiments shown in the drawings, which are hereafter briefly described.
FIG. 1 is a front elevation view illustrating a conventional elevator card.
FIG. 2 is a cross-sectional view of an upper portion of the elevator car.
FIG. 3 is a cross-sectional view of an alternate embodiment of an upper portion of the elevator car.
FIG. 4A is a perspective view of a rail and a roller for an elevator car.
FIG. 4B is a cross-sectional view of a portion of an elevator car including the rail and the roller of FIG. 4A.
FIG. 4C is a perspective view of a rail and a roller for an elevator car.
FIG. 5 is a perspective view of a roller on a rail with a thermal barrier applied to a hub of the roller.
FIG. 6 is a perspective view of a roller on a rail with a thermal barrier applied to a rim of the roller.
FIG. 7A is a perspective view of an embodiment of a roller on a rail having a thermal barrier along the top portion of the rail.
FIG. 7B is a perspective view of an embodiment of a roller and a rail containing a thermal barrier saddle.
FIG. 7C is a perspective view of the roller and the rail of FIG. 7B containing the thermal barrier saddle within an indentation in the rail.
FIG. 8A is an elevation view of another embodiment of a rail and roller of an elevator door system.
FIG. 8B is a partial section of a perspective view of the rail and roller illustrated in FIG. 8A.

### DETAILED DESCRIPTION

Through the inventors' efforts, it has been determined that during a fire, door assemblies may experience elevated temperatures through convective, conductive, and/or radiated heat. Door components, including the door hanger, roller, and rail, may be heated by the hot air surrounding the components, which is convective heat. Radiated heat may result from heat transfer from a higher temperature component to a lower temperature component in close proximity to the higher temperature component. Typically, such radiated heat comes from components with larger mass, such as the doors themselves, or headers and ceiling plates adjacent the other door assembly components. Conductive heat results when adjacent components are in contact allowing for the transfer of heat from one component to another. This results in the possibility of heat quickly spreading from one component to another.

During a fire, the door and header may be directly exposed to heat. With the door and header temperature increasing, heat may spread under unique circumstances from the door to the door hanger and/or from the header to the rail. Meanwhile, it is also conceivable that air around the door may be heated and rise under natural convection; hot air will directly heat the track and other components in the flow path of the leaked air. The rollers may be heated by heat that flows from the track, hanger, and the rising air. Any gap between the doors and header during the fire may result in hot air leaking from the furnace, further accelerating the temperature increase of the door assembly.

Elevator cars and door assemblies typically contain rollers that are coated with a polymer. The rollers have a metallic (such as steel or aluminum) rim and hub hosting a bearing, and a tire material around the rim (such as the aforementioned polymer). The rollers are connected to the door through the door hanger, and sit on the door rail. The rail is fastened to the header to distribute the door weight from the track to the wall. During a fire, it is conceivable that high temperatures may soften and melt the polymer of the tire on the roller, thereby reducing the thickness of the polymer between the rollers and rail. In the unlike event of such reduced thickness, a thermal shortcut between the rail and rollers may theoretically result. In light of these potential problems, the embodiments hereafter described aim to enhance the robustness of traditional door systems (and in particular the door rollers) to better enable the door systems to combat the potential negative effects of the heat associated with a building fire.

Efforts have been made throughout the drawings to use the same or similar reference numerals for the same or like components.

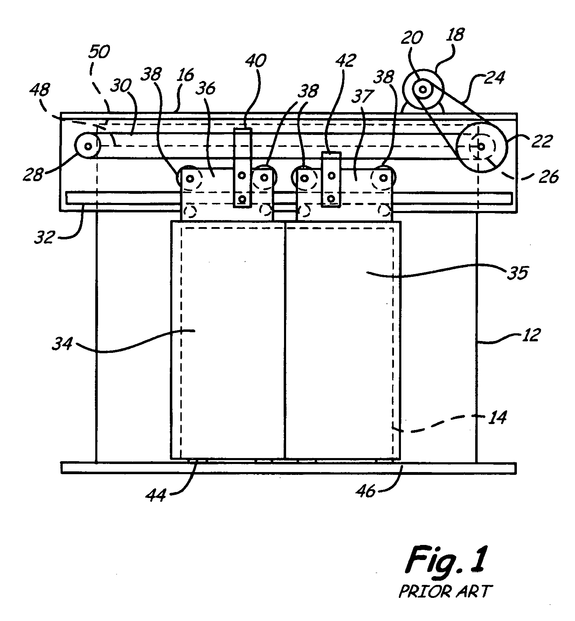

FIG. 1 is a front elevation view illustrating conventional elevator car 12. As illustrated, elevator car doorway (also referred to as an entrance) 14 is provided at the front face of car body 12. Door frame 16 extends along the width of doorway 14, and is fixed to car body 12 above doorway 14. Door motor 18 having motor pulley 20 is mounted on door frame 16. Reduction pulley 22 having a larger diameter than motor pulley 20 has belt 24 wound between motor pulley 20 and reduction pulley 22. Drive pulley 26, which has a smaller diameter than and is coaxial with reduction pulley 22, can be rotated integrally with the reduction pulley 22. Following pulley 28 is provided at the door frame 16, with second belt 30 wound between drive pulley 26 and following pulley 28.

Door rail 32 extends along the width direction of doorway 14 and is attached to door frame 16. Two car doors 34, 35 are suspended from door rail 32 through door hangers 36, 37. Each door hanger 36, 37 has two rollers 38 which are rotated along door rail 32. Car doors 34, 35 are connected to second belt 30 through door hangers 36, 37 and belt holders 40 and 42. A plurality of door shoes 44 are attached adjacent the lower edge of each of doors 34, 35. Door shoes 44 are inserted into a groove (not shown) of sill 46 disposed at the lower portion of doorway 14. Further, car body 12 is provided with a header that has upper panel 48 and ceiling panel 50.

During operation, motor pulley 20 is rotated by door motor 18, and the rotation is transmitted to reduction pulley 22 through reduction belt 24. Drive pulley 26 is rotated with reduction pulley 22, and thus second belt 30 is circulated and following pulley 28 is rotated. Since door hangers 36, 37 are connected to belt 30, door hangers 36, 37 and doors 34, 35 are reciprocated along door rail 32 by the circulation of second belt 30 to open or close doorway 14. Doors 34, 35 are suspended from door rail 32 and the door shoes 44 of doors 34, 35 are guided by the sill groove of sill 46 during the opening and the closing of doors 34, 35.

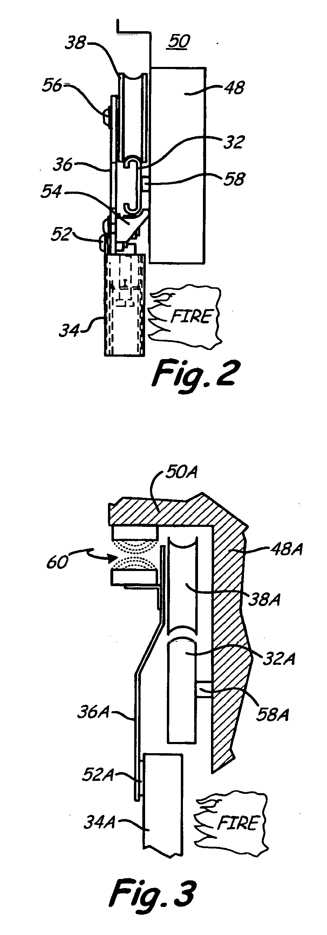

FIG. 2 is a cross-sectional view of an upper portion of elevator car 12. From this view, door 34 is connected to roller 38 by door hanger 36. In this embodiment, door hanger 36 is a relatively flat plate with apertures to allow for connection to adjacent components. Fastener 56 secures roller 38 with respect to the top of door hanger 36, while fastener 52 secures door hanger 36 with respect to the top of door 34. Fasteners 52 and 56 may be bolts, pins, machine screws, rivets, or similar devices known in the art. Roller 38 is a pulley, sheave, ring, wheel or similar structure also known in the art.

Also attached to door hanger 36 is bottom rail support 54. In the embodiment illustrated, bottom rail support 54 is a bracket with a smooth surface that engages the bottom of rail 32, and permits travel with respect thereto. In alternate embodiments, bottom rail support is a bearing, roller, wheel, or similar structure that allows for low friction engagement with rail 32. Rail 32 is a track on which roller 38 may travel, and is illustrated as being generally parallel to the tops of doors 34, 35 (See Fig. 1). Rail 32 is connected to upper panel 48 through attachment 58, which may be a fastener or mounting bracket to secure rail 32 in position. Rail 32 is secured in a fashion that permits movement of roller 38 and door hanger 36, and thus door 34, along rail 32. Upper panel 48 is joined to ceiling panel 50.

FIG. 3 is a cross-sectional view of an alternate embodiment of an upper portion of elevator car 12. In this embodiment, upper panel 48A is continuous with ceiling panel 50A. Rail 32A is attached to upper panel 48A with fastener 58A. Roller 38A rotatably engages rail 32A, and is connected to door 34A by door hanger 36A. Door hanger 36A is angled to allow for proper positioning of roller 38A with respect to door 34A, and is connected to door 34A by fastener 52A. Roller 38A and door hanger 36A are also connected to positioning apparatus 60. In one embodiment, positioning apparatus has an upper and lower magnet. The polarities of the magnets are arranged to provide desired interaction between the upper and lower magnets, which will create the desired force for creating movement of door 34A from the motion of roller 38A with respect to rail 32A.

A flame is illustrated in both FIGS. 2 and 3 adjacent the top of door 34 (and 34A), representing a fire within the building housing elevator car 12. A fire may result in increased temperature for the surrounding area, including elevator car 12. As illustrated, it is conceivable that the fire may affect the elevator car in several ways. First, higher temperatures may possibly result in conduction temperature increases in the rail and hanger. Second, the gap adjacent door 34 and upper panel 48 (and door 34A and upper panel 48A) may possibly allow for convection heating of adjacent elements. Third, a rise in air temperature may possibly affect the components of elevator car 12, especially roller 38. Fourth, and finally, the fire may possibly result in an increase in radiated heat from door 34 and upper panel 48 and ceiling panel 50. The current invention minimizes the small likelihood that these effects of a fire could conceivably have on elevator car 12.

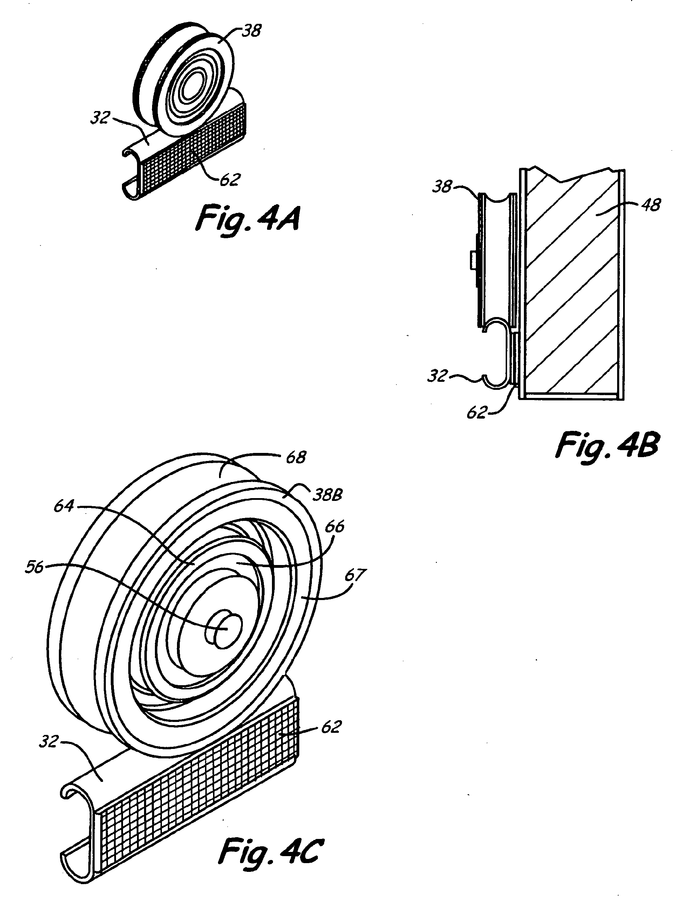

FIG. 4A is a perspective view of rail 32 and roller 38. FIG. 4B is a cross-sectional view of a portion of an elevator car including rail 32 and roller 38. These arrangements do not per se fall within the scope of the claimed invention. Roller 38 is machined wheel fabricated from carbon steel or aluminium. In both illustrations, a strip 62 of thermal resistant material has been added to a portion of rail 32. The strip extends along the length of the rail, and covers the area of contact between the rail 32 and upper panel 48. Strip 62 is a very low thermal conductivity material or coating. Strip 62 reduces the heat conducted to rail 32, and thus roller 38, from the header as represented by upper panel 48 in the embodiment illustrated.

FIG. 4C is a perspective view of rail 32 with another roller 38B. Again this arrangement per se does not fall within the scope of the claimed invention. In this embodiment, roller 38B is a wheel manufactured by stamping, and constructed from steel. Roller 38B contains rim 67, which is constructed from a rigid material, such as aluminium or carbon steel. In one embodiment, roller 67 is cylindrical, and has two flanges extending from a radially outer surface to create a channel, as is common with similar structures such as pulleys or sheaves. The radially inner surface of rim 67 is connected to hub 64, which secures bearing 66. Hub 64 is constructed from a material similar or the same as rim 67. Bearing 66 is a common bearing known in the art, such as a roller, ball, cage, or tapered wheel bearing. Bearing 66 receives fastener 56 to attach roller 38B to door hanger 36. The outer surface of rim 67 contains ring 68. Ring 68 typically consists of a polymer-based tire material that interacts with rail 32. In one embodiment, ring 68 is a tire material secured to the radially outer surface of rim 67, between two generally parallel flanges of rim 67.

Strip 62 of thermal resistant material has been attached to rail 32. Strip 62 extends along the length of the rail, and covers the area of contact between rail 32 and the header (not shown). Rail 32 is constructed from a rigid material, such as metal. Again, strip 62 is a very low thermal conductivity material or coating. In one embodiment, strip 62 is a ceramic material. In other embodiments, strip 62 is a metal with a lower thermal conductivity than the material of rail 32, a composite, or similar insulting material. Specifically, strip 62 may be silica, mineral wool, ceramic fiber, fibreglass, alumina fiber, or alumina-silica fiber. Strip 62 may be a solid sheet of material attached to rail 32, or may be a coating applied to rail 32. Strip 62 reduces the heat transferred to rail 32, and thus roller 38, from the header or wall 48. Providing strip 62 in the door assembly allows for designs wherein roller 38 and rail 32 can be positioned closer to the header, including wall 48, without the worry of conductive and radiated heat transfer to rail 32. This design reduces the amount of space needed for the door assembly. In alternate embodiments, Strip 62 may cover additional portions of rail 32, or header or wall 48, or both to further prevent conductive and radiated heat transfer to rail 32.

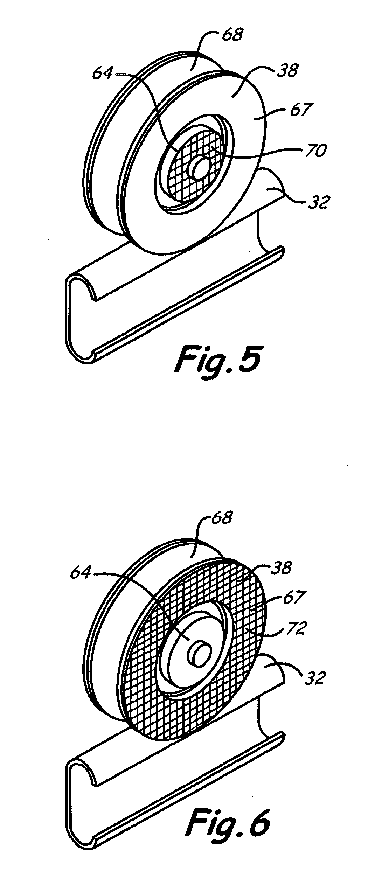

FIG. 5 and FIG. 6 are perspective views of roller 38 on rail 32. These arrangements do not per se fall within the scope of the claimed invention. Roller 38 contains rim 67, which is a circular flange structure or sheave constructed from a rigid material, such as aluminum or carbon steel. Rim 67 is connected to hub 64, which secures a bearing and fastener for attaching roller 38 to door hanger 36. Hub 64 is constructed from a material similar or the same as rim 67, which may be a metal such as aluminum or carbon steel. Hub 64 may be fabricated as a part attached to rim 67. In other embodiments, hub 64 is a flange structure secured to rim 67, or a flat piece of material such as a washer that is used to hold a bearing in place with respect to rim 67. The outer surface of rim 67 contains ring 68. Ring 68 typically consists of a polymer based tire material that interacts with rail 32.

A thermal barrier 70 has been applied to hub 64 in FIG. 5. Similarly, thermal barrier 72 has been applied to rim 67 in FIG. 6. Thermal barriers 70, 72 are low thermal conductive materials, such as ceramics, composites, or similar insulating materials. Specifically, thermal barriers 70, 72 may be ceramic coatings including paints, intumescent layers, multilayer low thermal conduction coatings, and the like. Thermal barriers 70, 72 are applied as coatings, or are strips of material secured to roller 38. Thermal barriers 70, 72 reduce heat conduction to roller 38 from door hanger 36, as well as reduce heat convection to roller 38 from higher temperature air surrounding the roller in an elevated temperature setting. Roller 38 may contain one or both thermal barriers 70, 72, depending on the design of the surrounding door assembly components and roller 38 proximity thereto. This again provides of the benefit of reducing heat transfer among door assembly components, which allows for a more compact door assembly design. For example, thermal barrier 70 prevents heat conduction to roller 38 from the air, while thermal barrier 72 reduces heat conduction of rim 67 of roller 38 to door hanger 36, 37.

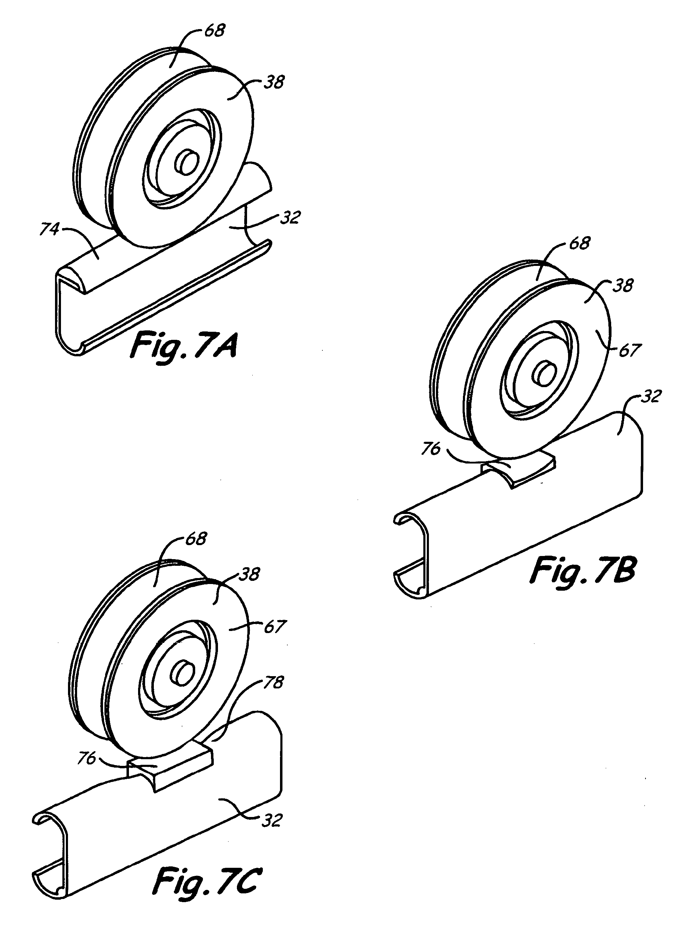

FIG. 7A is a perspective view of roller 38 on rail 32. Again this arrangement per se does not fall within the scope of the claimed invention. Roller 38 contains ring 68, which is a polymer based tire material that contacts rail 32. Rail 32 contains a top portion 74 that contacts ring 68. Top portion 74 is constructed from a low thermal conductivity material. Top portion 74 may be manufactured separately from the rest of rail 32, and the two parts then are secured together. Top portion 74 inhibits heat transfer between rail 32 and roller 38.

FIG. 7B and 7C are both perspective views of roller 38 on rail 32. Again this arrangement per se does not fall within the scope of the claimed invention but the roller 38 contains rim 67 that supports ring 68. Roller 38 and ring 68 are constructed as previously described. Similarly, rail 32 is a metal track that allows for rotary movement of roller 38 thereon. In these embodiments, rail 32 contains a saddle 76, which acts as a thermal barrier. That is, saddle 76 is constructed from a material that inhibits the transfer of heat between rail 32 and roller 38. Roller 38 is illustrated as being spaced above rail 32 for purposes of showing saddle 76. In use, roller 38 is in contact with rail 32. Saddle 76 is positioned on rail so that when doors 34, 35 are in the closed position (see FIG. 1), roller 38 does not directly contact rail 32. That is, saddle 76 is between rail 32 and roller 38. Saddle 76 is a piece of material secured to rail 32, or a small area of coating on rail 32. As illustrated in FIG. 7B, saddle 76 is a thermal barrier added to an existing rail 32. In FIG. 7C, rail 32 has been specially manufactured to contain indentation 78. Saddle 76 is placed in indentation 78 such that the top of saddle 76 is parallel to the top of rail 32 to assure smooth travel of roller 38 on rail 32. In other embodiments, saddle 76 may extend along a length of rail 32.

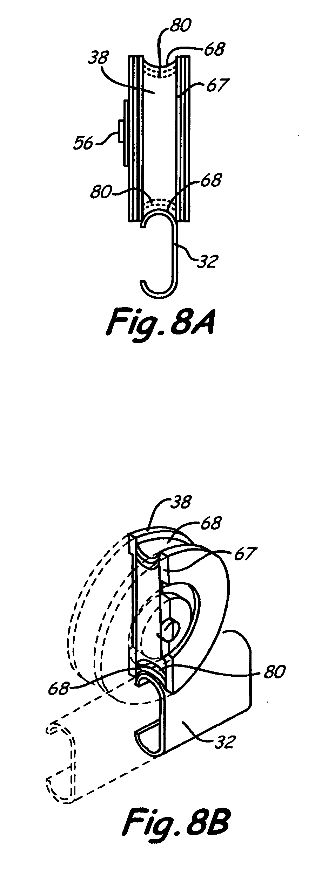

FIG. 8A is an elevation view of an embodiment of rail 32 and roller 38 in accordance with the invention. FIG. 8B is a partial section of a perspective view of rail 32 and roller 38 illustrated in FIG. 8A. Roller 38 contains fastener 56 for securing the roller to the door assembly. Roller 38 also has ring 68, which is again a tire material that contacts rail 32. In one embodiment, ring 68 is a polymer such as polyurethane. In this embodiment, thermal barrier 80 is present between the rim 67 of roller 38 and ring 68. Thermal barrier is an intumescent layer, which may be applied as an adhesive between the rim 67 of roller 38 and ring 68. The intumescent material has a starting expansion temperature that is below the tire melting temperature. Once the intumescent material reaches the starting expansion temperature, a chemical reaction will be initiated resulting in the swelling of the layer. The resultant increase in volume and decrease in density also relates to a decrease in thermal conductivity of the material. In one embodiment, thermal barrier 80 will increase up to 350 times in volume, and result in a ten-fold decrease in thermal conductivity. This results in a blocking of heat transfer from the track to the hub. By reducing the heating speed of ring 68 and managing ring temperature below the melting temperature, the tire will not be melted and thus cause visible flame. This effectively eliminates one of the causes of failure during door fire testing.

Examples of materials for use as thermal barrier 80 are adhesives for polyurethane and metal surfaces mixed with 1-20% of expandable graphite having SET 150 -160C such as Nord-Min®150, Grafguard® 160, and Minelco FireCarb TEG-160. The adhesion force between tire and hub is maintained at 90% or higher than its original strength before adding the expandable graphite. The adhesion force will not be reduced within the designed life time of roller 38.

The application of thermal barriers 62, 70, 72, 76 allow for a method in which a door assembly mounted on a frame defining a doorway for at least one door is provided, wherein the one door is movably supported on the frame by attachment to at least one roller supported on a rail secured to the frame. A thermal barrier is applied to at least a portion of the door assembly. The aforementioned thermal barriers 62, 70, 72, 76, 80 may be applied as desired or required for the design of roller 38 and rail 32. All embodiments of thermal barriers 62, 70, 72, 76, 80 may be used individually or in combination with the other embodiments.

The application of thermal barrier 80 allows for a method in which a door assembly mounted on a frame defining a doorway for at least one door is provided, wherein the one door is movably supported on the frame by attachment to at least one roller supported on a rail secured to the frame. A roller for supporting the door on the rail is fabricated, and the roller has a rim portion with a hub portion radially inward of the rim portion. A thermal barrier is applied to at least a portion of the radially outer surface of the rim portion, and a tire material is then secured to the radially outer surface of the rim portion.

The aforementioned discussion is intended to be merely illustrative of the present invention and should not be construed as limiting the appended claims to any particular embodiment or group of embodiments. Thus, while the present invention has been described in particular detail with reference to specific exemplary embodiments thereof, it should also be appreciated that numerous modifications and changes may be made thereto without departing from the broader and intended scope of the invention as set forth in the claims that follow.

The specification and drawings are accordingly to be regarded in an illustrative manner and are not intended to limit the scope of the appended claims. In light of the foregoing disclosure of the present invention, one versed in the art would appreciate that there may be other embodiments and modifications within the scope of the present invention. Accordingly, all modifications attainable by one versed in the art from the present disclosure within the scope of the present invention are to be included as further embodiments of the present invention. The scope of the present invention is to be defined as set forth in the following claims.

## Claims

1. A door assembly comprising:
a door header (48) mounted on a frame (16) defining a doorway (14);
a door (34, 35) movably supported on the frame (16);
a track (32) including at least one supporting surface along at least one side of the track (32),
the track (32) secured to the door header (48); and
at least one roller (38) that is adapted to roll along the track (32), the roller (38) hailing a rim portion (67) adjacent a hub portion (64), and a tire material (66) surrounding the rim portion (67), wherein the tire material (68) contacts the track (32); and
a thermal barrier (80) between the tire material (68) and at least one of the rim (67) and the hub (64) to prevent heat transfer to the tire material (68);
**characterised in that** the thermal barrier (80) is an intumescent material.

2. The assembly of claim 1, wherein the thermal barrier (80) is applied as an adhesive between the rim portion (67) and tire material (68).

3. The assembly of claim 1 or 2, wherein the intumescent material (80) is capable of increasing in volume up to 350 times when heat is applied thereto.

4. The assembly of any preceding claim, wherein the intumescent material (80) results in approximately tenfold decrease in the thermal conductivity between the tire material (68) and the rim portion (67) of the roller (38).

5. An elevator comprising:
a hoistway having one or more hoistway doorways;
a car (12) configured to move vertically within the hoistway, the car (12) comprising:
a car doorway (14) configured to be aligned with the one or more hoistway doorways: end
a door assembly comprising:
a door header (48) mounted on a frame (16) defining the car doorway (14);
a door (34, 35) movably supported on the frame (16);
a rail (32) including at least one supporting surface along at least one side of the rail (32), the rail secured to the door header (48);
at least one roller (38) that is adapted to roll along the supporting surface of the rail (32), **characterised in that** the roller (38) has a rim (67) adjacent a hub (64), and a tire material (68) surrounding the rim (67), wherein the tire material (68) contacts the rail (32); and
a thermal barrier (80) between the tire material (68) and at least one of the hub (64) and rim (67) to inhibit heat transfer to the tire material (68).

6. The elevator of claim 5, further comprising:
a driving motor (18) connected to a driving pulley (26);
a driven pulley (28) provided apart from the driving pulley (26);
a driving belt (30) wound around the driving pulley (26) and the driven pulley (28), the door (34, 35) being attached to the driving belt (30).

7. The elevator of claim 5 or 6, wherein the thermal barrier (80) is an intumescent material.

8. The elevator of claim 7, wherein the thermal barrier (80) is applied as an adhesive between the rim (67) and tire material (68).

9. The elevator of claim 7 or 8, wherein the intumescent material (80) is capable of increasing in volume up to 350 times when heat is applied thereto.

10. The elevator of any of claims 7-9, wherein the intumescent material (80) results in approximately tenfold decrease in the thermal conductivity between the tire material (68) and the rim (67) of the roller (38).

11. A roller assembly comprising:
a frame (16) defining a doorway (14);
a rail (32) including at least one supporting surface along at least one side of the rail (32), the rail (32) secured to the frame (16);
at least one roller (38) that is adapted to roll along the rail (32), the roller (38) having a rim portion (67) adjacent a hub portion (64), and a tire material (68) surrounding the rim portion (67), wherein the tire material (68) contacts the rail (32); and
a thermal barrier (80) between tire material (68) and at least one of the rim (67) and the hub (64) to prevent heat transfer to the tire material (68);
**characterised in that** the thermal barrier (80) is an intumescent material.

12. The assembly of claim 11, wherein the thermal barrier (80) is applied as an adhesive between the rim (67) and tire material (68).

13. The assembly of claim 11 or 12, wherein the intumescent material (80) is capable of increasing in volume up to 350 times when heat is applied thereto.

14. The assembly of any of claims 11 to 13, wherein the intumescent material (80) results in approximately tenfold decrease in the thermal conductivity between the tire material (68) and the rim of the roller (67).

## Patentansprüche

1. Türbaugruppe, die Folgendes umfasst:
einen Türkämpfer (48), der an einer Umrahmung (16) montiert ist, einen Türdurchgang (14) definierend;
eine Tür (34, 35), die beweglich an der Umrahmung (16) gestützt ist;
eine Bahn (32) mit mindestens einer Stützoberfläche entlang mindestens einer Seite der Bahn (32),
wobei die Bahn (32) an dem Türkämpfer (48) gesichert ist; und
mindestens eine Rolle (38) die ausgelegt ist zum Rollen entlang der Bahn (32), wobei die Rolle (38) einen Kranzabschnitt (67) benachbart zu einem Nabenabschnitt (64) aufweist und ein den Kranzabschnitt (67) umgebendes Reifenmaterial (68), wobei das Reifenmaterial (68) die Bahn (32) kontaktiert; und
eine thermische Barriere (80) zwischen dem Reifenmaterial (68) und dem Kranz (67) und/oder der Nabe (64), um eine Wärmeübertragung zu dem Reifenmaterial (68) zu verhindern;
**dadurch gekennzeichnet, dass** die thermische Barriere (80) ein intumeszentes Material ist.

2. Baugruppe nach Anspruch 1, wobei die thermische Barriere (80) als ein Kleber zwischen dem Kranzabschnitt (67) und dem Reifenmaterial (68) aufgebracht ist.

3. Baugruppe nach Anspruch 1 oder 2, wobei das intumeszente Material (80) sein Volumen bis zum 350fachen vergrößern kann, wenn Wärme darauf einwirkt.

4. Baugruppe nach einem vorhergehenden Anspruch, wobei das intumeszente Material (80) zu einer ungefähr zehnfachen Verringerung der Wärmeleitfähigkeit zwischen dem Reifenmaterial (68) und dem Kranzabschnitt (67) der Rolle (38) führt.

5. Aufzug, der Folgendes umfasst:
einen Schacht mit einem oder mehreren Schachttürdurchgängen;
einen Fahrkorb (12), der konfiguriert ist zum vertikalen Bewegen innerhalb des Schachts, wobei der Fahrkorb (12) Folgendes umfasst:
einen Türdurchgang (14), der konfiguriert ist zum Ausgerichtetwerden auf den einen oder die mehreren Schachttürdurchgänge; und
eine Türbaugruppe, die Folgendes umfasst:
einen Türkämpfer (48), der an einer Umrahmung (16) montiert ist, den Türdurchgang (14) definierend;
eine Tür (34, 35), die beweglich an der Umrahmung (16) gestützt ist;
eine Schiene (32) mit mindestens einer Stützoberfläche entlang mindestens einer Seite der Schiene (32), wobei die Schiene (32) an dem Türkämpfer (48) gesichert ist; und
mindestens eine Rolle (38) die ausgelegt ist zum Rollen entlang der Stützoberfläche der Schiene (32), **dadurch gekennzeichnet, dass** die Rolle (38) einen Kranz (67) benachbart zu einer Nabe (64) aufweist und ein den Kranz (67) umgebendes Reifenmaterial (68), wobei das Reifenmaterial (68) die Schiene (32) kontaktiert; und
eine thermische Barriere (80) zwischen dem Reifenmaterial (68) und dem Kranz (67) und/oder der Nabe (64), um eine Wärmeübertragung zu dem Reifenmaterial (68) zu verzögern.

6. Aufzug nach Anspruch 5, der weiterhin Folgendes umfasst:
einen Fahrmotor (18), der mit einer Antriebsscheibe (26) verbunden ist;
eine Abtriebsscheibe (28), die von der Antriebsscheibe (26) beabstandet vorgesehen ist;
einen Antriebsriemen (30), der um die Antriebsscheibe (26) und die Abtriebsscheibe (28) gewickelt ist, wobei die Tür (34, 35) an dem Antriebsriemen (30) angebracht ist.

7. Aufzug nach Anspruch 5 oder 6, wobei die thermische Barriere (80) ein intumeszentes Material ist.

8. Aufzug nach Anspruch 7, wobei die thermische Barriere (80) als ein Kleber zwischen dem Kranz (67) und dem Reifenmaterial (68) aufgebracht ist.

9. Aufzug nach Anspruch 7 oder 8, wobei das intumeszente Material (80) sein Volumen bis zum 350fachen vergrößern kann, wenn Wärme darauf einwirkt.

10. Aufzug nach einem der Ansprüche 7-9, wobei das intumeszente Material (80) zu einer ungefähr zehnfachen Verringerung der Wärmeleitfähigkeit zwischen dem Reifenmaterial (68) und dem Kranz (67) der Rolle (38) führt.

11. Rollenbaugruppe, die Folgendes umfasst:
eine Umrahmung (16), die einen Türdurchgang (14) definiert;
eine Schiene (32) mit mindestens einer Stützoberfläche entlang mindestens einer Seite der Schiene (32), wobei die Schiene (32) an der Umrahmung (16) gesichert ist;
mindestens eine Rolle (38), die ausgelegt ist zum Rollen entlang der Schiene (32), wobei die Rolle (38) einen Kranzabschnitt (67) benachbart zu einem Nabenabschnitt (64) aufweist und ein den Kranzabschnitt (67) umgebendes Reifenmaterial (68), wobei das Reifenmaterial (68) die Schiene (32) kontaktiert; und
eine thermische Barriere (80) zwischen dem Reifenmaterial (68) und dem Kranz (67) und/oder der Nabe (64), um eine Wärmeübertragung zu dem Reifenmaterial (68) zu verhindern;
**dadurch gekennzeichnet, dass** die thermische Barriere (80) ein intumeszentes Material ist.

12. Baugruppe nach Anspruch 11, wobei die thermische Barriere (80) als ein Kleber zwischen dem Kranz (67) und dem Reifenmaterial (68) aufgebracht ist.

13. Baugruppe nach Anspruch 11 oder 12, wobei das intumeszente Material (80) sein Volumen bis zum 350fachen vergrößern kann, wenn Wärme darauf einwirkt.

14. Baugruppe nach einem der Ansprüche 11-13, wobei das intumeszente Material (80) zu einer ungefähr zehnfachen Verringerung der Wärmeleitfähigkeit zwischen dem Reifenmaterial (68) und dem Kranz der Rolle (67) führt.

## Revendications

1. Assemblage de porte, comprenant :
un linteau de porte (48) monté sur un châssis (16) définissant un encadrement de porte (14) ;
une porte (34, 35) supportée mobile sur le châssis (16) ;
une piste (32) comprenant au moins une surface de support le long d'au moins un côté de la piste (32),
la piste (32) étant fixée au linteau de porte (48) ; et
au moins un galet (38) qui est à même de rouler le long de la piste (32), le galet (38) ayant une portion de rebord (67) adjacente à une portion de moyeu (64) et un matériau de bandage (68) entourant la portion de rebord (67), dans lequel le matériau de bandage (68) vient en contact avec la piste (32) ; et
une barrière thermique (80) entre le matériau de bandage (68) et au moins l'un du rebord (67) et du moyeu (64) pour empêcher le transfert de chaleur au matériau de bandage (68) ;
**caractérisé en ce que** la barrière thermique (80) est un matériau intumescent.

2. Assemblage selon la revendication 1, dans lequel la barrière thermique (80) est appliquée sous la forme d'un adhésif entre la portion de rebord (67) et le matériau de bandage (68).

3. Assemblage selon la revendication 1 ou la revendication 2, dans lequel le matériau intumescent (80) est à même d'augmenter en volume jusqu'à 350 fois lorsque de la chaleur lui est appliquée.

4. Assemblage selon l'une quelconque des revendications précédentes, dans lequel le matériau intumescent (80) entraîne une réduction d'environ 10 fois de la conductibilité thermique entre le matériau de bandage (68) et la portion de rebord (67) du galet (38).

5. Ascenseur comprenant :
une cage d'ascenseur ayant un ou plusieurs encadrements ;
une cabine (12) configurée pour se déplacer verticalement dans la cage d'ascenseur, la cabine (12) comprenant :
un encadrement de cabine (14) configuré pour s'aligner sur le un ou plusieurs encadrements de cage d'ascenseur ; et
un assemblage de porte comprenant :
un linteau de porte (48) monté sur un châssis (16) définissant l'encadrement de cabine (14) ;
une porte (34, 35) supportée mobile sur le châssis (16) ;
un rail (32) comprenant au moins une surface de support le long d'au moins un côté du rail (32), le rail étant fixé au linteau de porte (48) ;
au moins un galet (38) qui est à même de rouler le long de la surface de support du rail (32), **caractérisé en ce que** le galet (38) présente un rebord (67) adjacent à un moyeu (64), et un matériau de bandage (68) entourant le rebord (67), dans lequel le matériau de bandage (68) vient en contact avec le rail (32) ; et
une barrière thermique (80) entre le matériau de bandage (68) et au moins l'un du moyeu (64) et du rebord (67) pour inhiber le transfert de chaleur au matériau de bandage (68).

6. Ascenseur selon la revendication 5, comprenant par ailleurs :
un moteur d'entraînement (18) connecté à une poulie menante (26) ;
une poulie menée (28) aménagée séparément de la poulie menante (26) ;
une courroie d'entraînement (30) enroulée autour de la poulie menante (26) et de la poulie menée (28), la porte (34, 35) étant fixée à la courroie d'entraînement (30).

7. Ascenseur selon la revendication 5 ou la revendication 6, dans lequel la barrière thermique (80) est un matériau intumescent.

8. Ascenseur selon la revendication 7, dans lequel la barrière thermique (80) est appliquée sous la forme d'un adhésif entre le rebord (67) et le matériau de bandage (68).

9. Ascenseur selon la revendication 7 ou la revendication 8, dans lequel le matériau intumescent (80) est à même d'augmenter en volume jusqu'à 350 fois lorsque de la chaleur lui est appliquée.

10. Ascenseur selon l'une quelconque des revendications 7 à 9, dans lequel le matériau intumescent (80) provoque une réduction d'environ 10 fois de la conductibilité thermique entre le matériau de bandage (68) et le rebord (67) du galet (38).

11. Assemblage de galet comprenant :
un châssis (16) définissant un encadrement de porte (14) ;
un rail (32) comprenant au moins une surface de support le long d'au moins un côté du rail (32), le rail (32) étant fixé au châssis (16) ;
au moins un galet (38) qui est à même de rouler le long du rail (32), le galet (38) ayant une portion de rebord (67) adjacente à la portion de moyeu (64) et un matériau de bandage (68) entourant la portion de rebord (67), dans lequel le matériau de bandage (68) est en contact avec le rail (32) ; et
une barrière thermique (80) entre le matériau de bandage (68) et au moins l'un du rebord (67) et du moyeu (64) pour empêcher le transfert de chaleur au matériau de bandage (68) ;
**caractérisé en ce que** la barrière thermique (80) est un matériau intumescent.

12. Assemblage selon la revendication 11, dans lequel la barrière thermique (80) est appliquée sous la forme d'un adhésif entre le rebord (67) et le matériau de bandage (68).

13. Assemblage selon la revendication 11 ou la revendication 12, dans lequel le matériau intumescent (80) est à même d'augmenter de volume jusqu'à 350 fois lorsque de la chaleur lui est appliquée.

14. Assemblage selon l'une quelconque des revendications 11 à 13, dans lequel le matériau intumescent (80) entraîne une réduction d'environ 10 fois de la conductibilité thermique entre le matériau de bandage (68) et le rebord du galet (67).
